Europäisches Patentamt

(19) **European Patent Office**

Office européen des brevets

(11) Publication number: **0 053 921**
**A2**

(12) # EUROPEAN PATENT APPLICATION

(21) Application number: **81305719.7**

(22) Date of filing: **03.12.81**

(51) Int. Cl.³: **C 10 L 5/14**
**C 22 B 1/244, B 01 J 2/28**

(30) Priority: **08.12.80 ZA 807663**

(43) Date of publication of application:
**16.06.82 Bulletin 82/24**

(84) Designated Contracting States:
**AT BE CH DE FR GB IT LI LU NL SE**

(71) Applicant: **REVERTEX (SOUTH AFRICA)**
**(PROPRIETARY) LIMITED**
**200 Lansdowne Road**
**Jacobs Natal(ZA)**

(72) Inventor: **Bishop, Richard Timothy**
**20 Millar Grove Berea**
**Durban Natal(ZA)**

(74) Representative: **Funge, Harry**
**SYDNEY E. M'CAW & CO. 41-51 Royal Exchange Cross**
**Street**
**Manchester M2 7BD(GB)**

(54) **Aggregates.**

(57) The invention concerns a method of forming aggregates of particulate material such as coal dust, mineral ores, sand, graphite, sawdust, fertilisers and the like by treating the particles with the reaction product of (a) an aqueous emulsion of a synthetic polymer containing acidic groups and (b) a basic substance which neutralises at least some of the acidic groups. (a) is preferably acrylic acid or methylacrylic acid copolymerised with a C1 and C4 alkyl acrylate or styrene or butadiene, and (b) is preferably an alkali and a polymer emulsion which imparts non-wetting properties to the particulate material is optionally added.

EP 0 053 921 A2

Croydon Printing Company Ltd.

## AGGREGATES

This invention relates to the treatment of particulate material to form aggregates and is particularly concerned with the formation of briquettes.

The conventional method of preparing briquettes is by mixing the particulate material such as coal, charcoal, ore powder and the like with starch, molasses, ground maize, dextrines, borax, lime, silica, ammonium lignosulphonates, pitch or other binding materials.  The particular binding material used is determined by cost, the final properties required of the dried briquettes, the internal cohesive strength of the briquette before drying (the "green" strength), the ease of release from the moulds during processing, the storage conditions of the briquettes and other circumstances.

Binders such as starch, molasses, ground maize, dextrines and the like form viscous mixtures with water thus imparting good green strength to particulate matter.

These binders are, however, difficult to incorporate with particulate materials, require high levels of water to wet out the particles and produce final briquettes which have little water resistance.   Aqueous mixes of borax, lime, silica and ammonium lignosulphonates are generally of low viscosity and impart little green strength to the particulate materials in the moulding stage, as well as leaving undesirable residues after incinerating the briquettes.   Pitch has to be melted at high temperatures before it can be used in the moulding process and the formed briquettes have again to be heated to high temperature to achieve final strength and remove undesirable volatiles present.

Quality, price and availability of natural binders varies from time to time and from place to place.

It is an object of the present invention to produce aggregates of particulate material, and particularly briquettes, using predominantly synthetic polymers as binders which are of consistent quality and availability and which have surprisingly improved properties having regard to conventional aggregates of briquettes.

According to the invention, a method of aggregating particulate material includes the step of mixing the material with the reaction product of (a) an aqueous emulsion of a synthetic polymer which contains acidic groups or groups convertible to acidic groups, which are reactable with a basic substance to cause swelling or solution of the polymer, and to cause an increase in viscosity of the emulsion and (b) a basic substance in an amount sufficient to neutralize at least some of the acidic groups; and then forming a desired form of aggregate by known techniques.

The increase in viscosity is achieved with an increase in pH and is generally accompanied by a change in colour to clear or opalescent.

Generally, such synthetic polymer emulsions are referred to as "alkali soluble" thickeners (which term is used herein to include polymer emulsions which are not truly "alkali soluble" but more correctly only "alkali swellable"). Essentially all increase the viscosity of aqueous systems, the extent to which such thickening occurs being dependent on many factors - some related to the chemical composition of the thickener and some to the other ingredients in the aqueous system.

In the preferred form, alkali is added to the low viscosity alkali soluble emulsion after it has been intimately mixed with the particulate material. However, equally good results are obtained if the polymer is solubilised or swollen by the addition of alkali before or during its addition to the particulate material.

For certain uses and circumstances it may, for optimum briquette production, be necessary to incorporate more than one alkali soluble emulsion and also a conventional polymer emulsion, wetting agent or surfactant, antifoam compound and the like.

Although a wide range of ratios of alkali soluble emulsions to particulate materials is possible, surprisingly good results having regard to green strength, mould release, water insensitivity, final dry strength and other properties may be obtained with ratios of the order of 0,25% of alkali soluble polymer by mass on dry particulate material.

The level of alkali soluble polymer used should be from 0,1 to about 10% by mass of the particulate material, but obviously the optimum amount will depend on the nature of the particulate material and the required properties. For a chrome ore briquette the amount of alkali soluble polymer can be about 0,15% for anthracite about 0,60% and for charcoal about 1,0% by mass on the particulate material.

The preferred acid monomers used in producing the alkali soluble thickener are unsaturated carboxylic acids such as acrylic acid or methacrylic acid with the emulsion also containing acrylic acid esters and methacrylic acid esters of an alcohol having 1 to 18 carbon atoms, especially methyl acrylate or ethyl acrylate. Suitable alkali soluble emulsions can also be obtained by incorporating other unsaturated hydrocarbon monomers, some with subsequent modification, to achieve the described effects on addition of alkali e.g. acrylonitrile and its subsequent hydrolysis. The composition and manufacture of such products are widely disclosed in the literature. British Patent 870,994 discloses the preparation of aqueous emulsion copolymers of methacrylic acid and a lower (C1-C4) alkyl acrylate and its thickener effect upon neutralisation. U.S. Patent 4,138,381 discloses thickeners incorporating at least one unsaturated carboxylic acid of 3 - 6 carbon atoms while U.S. Patent 3,657,175 discloses a composition being a mixture of methacrylic acid, an ester of an ethoxylated alocohol and a balance comprising styrene, butadiene or mixture thereof.

Various thickeners were prepared for use in the Examples that follow. All were produced by the generally well known and disclosed emulsion polymerisation techniques which are summarised as follows:

Equipment:

Stirred, heated/cooled vessel fitted with condensor and facilities for adding monomers, catalysts, etc.

(at predetermined rates where necessary).

Ingredients:

Aqueous phase –

      Water                     typically 71,0 parts

      Stabilisers/surfactants       3,0

Monomers -

|  |  |
|---|---|
| C3-C6 unsatured carboxlic acid | 10,0 parts |
| C1-C4 alkyl acrylate | 15,0 |
| Molecular weight modifier | 0,0-1,0 |

Catalyst -

|  |  |
|---|---|
| Redox system | 0,02 |
| Water | 1,0 |

Procedure:

Heat aqueous phase to 60°C.

Add 20% of the monomers and heat at 80°C.

Add initial catalyst portion then the remaining monomer
and catalyst over one hour.

Cool and sample.

(Neutralise where preferred).

Thickener A:

Prepared to the above procedure based on methacrylic acid and ethyl acrylate with molecular weight optimised to achieve maximum viscosity on neutralisation. At pH 4,0 nonvolatile content is 25% and the viscosity is low (less 100 c.p.s.). Non-volatile content is reduced to 3% and at pH9, after neutralization, the viscosity is 35,000 c.p.s.

Thickener B:

Similar to A above, but molecular weight and monomer ratio optimised to give a lower chemical solubility on neutralisation thus exhibiting greater "wet tack" i.e. the thickener is "sticky" and "stringy". At pH 9,0, after neutralisation, nonvolatile content is 22% and viscosity (Brookfield LVT 4/12) is 10,000 c.p.s.

Example 1:

The following examples illustrate that briquettes made with a particular alkali soluble polymer have excellent mould release properties, dry crushing strengths proportional to the polymer levels used, but poor resistance to water and compares these with briquettes made from 2 natural organic binders.

Briquettes of anthracite powder, the bulk of which was below 7,5mm in size, were prepared using, maize meal and thickener A (as previously described).

The following mixtures by mass were prepared:

|  | A | B | C | D | E | F | G | H |
|---|---|---|---|---|---|---|---|---|
| Water | 8,0 | 8,8 | 9,2 | 9,6 | 10,0 | 10,4 | 10,4 | 10,4 (hot) |
| Thickener A (solid contents) | 0,8 | 0,5 | 0,4 | 0,3 | 0,2 | 0,1 | – | – |
| Ammonium hydroxide | 0,3 | 0,2 | 0,2 | 0,2 | 0,2 | 0,1 | – | – |
| Water soluble starch* | – | – | – | – | – | – | 2,5 | – |
| Maize meal | – | – | – | – | – | – | – | 6,0 |

*Stygel Core Binder" (from African Products (Pty) Limited)

The ammonium hydroxide was added to pH 9 (when the opaque, diluted thickener A turned clear and the viscosity increased).

100 gram samples of dry anthracite powder were placed in the bowl of a planetary mixer and the above mixtures added with stirring.

When thoroughly mixed the damp materials were placed in a perpendicular piston mould and subjected to compression under a pressure of 30 Kpa.

It was noted that all the damp briquettes made using thickener A mixtures slipped unaided out of the mould under the force of gravity when the compression was removed.  This resulted in none of the briquettes being damaged.  In contrast, briquettes made using soluble starch and maize meal were less easy to remove.  As a consequence, many of the briquettes broke in half.  The ability of the freshly formed briquettes to withstand handling without breaking is referred to as "green strength".

The moulded mixtures were dried overnight at 60$^o$C in a forced air oven.  After cooling, one briquette from each series was submerged in water for 5 hours. Another briquette from each series was kept dry.

The resistance to crushing of the dry and wet briquettes were measured in a Houndsfield tensometer.

The results were as follows:

<u>Mould release</u>:  A to F were all excellent.   G and H were somewhat inferior.

| <u>Crushing strengths</u> | <u>A</u> | <u>B</u> | <u>C</u> | <u>D</u> | <u>E</u> | <u>F</u> | <u>G</u> | <u>H</u> |
|---|---|---|---|---|---|---|---|---|
| Dry | 70 | 54 | 40 | 36 | 20 | 10 | 40 | 20 |
| Wet | 0 | 0 | 0 | 0 | 0 | 0 | 0 | 0 |

The crushing strengths of the dry briquettes is linearly related to the amounts of thickener A present.  0,43 parts thickener A per 100 parts
anthracite gives strengths equal to 2,5 parts
soluble starch and twice the strength of briquettes
bonded with 6 parts maize meal.

All these briquettes completely disintegrated
on submersion in water.

Example 2

With a different particulate material, chrome
ore, different formulations of alkali soluble
emulsions are required for optimum results.

Chrome ore powder is a far coarser and less
absorbant material than anthracite.  It therefore requires a binder with high wet tack if it
is to be moulded into briquettes of acceptable
"green strength".

The following mixtures were prepared:

- 14 -

|                              | A    | B   | C   |
|------------------------------|------|-----|-----|
| Water                        | 2,5  | 3,0 | 7,0 |
| Thickener A (solids contents)| –    | 0,1 | –   |
| Thickener B      "      "     | 0,2  | 0,2 | –   |
| Stygel Core Binder           |      |     | 2,5 |

As before, pH is adjustable with ammonium hydroxide to pH 9,0.

Each of the above were added to 100 grams of chrome ore powder and thoroughly mixed in a planetary mixer.

The damp materials were briquetted as in Example 1.

When using thickener B far less water is required to wet out the chrome ore powder than is required when using thickener A or soluble starch.  This is very significant as less drying is needed after moulding to achieve final strength.

Mix A produced excellent briquettes with dry crushing strengths of 138 Kpa.　There was, however, some evidence of sticking in the mould.

Mix B produced excellent briquettes with dry crushing strengths of 148 Kpa and very good mould release properties.

With Mix C difficulties were experienced with mould release but some satisfactory briquettes were produced.　The crushing strengths were, however, lower at only 80 Kpa.

The above indicates that thickener B at low levels gives good briquettes, but suspect mould release properties (Mix A).　The blend of thickener A and thickener B appears to give an ideal system for chrome ore (Mix B).　After 5 hours submersion in water all briquettes disintegrated to a similar extent.

Example 3

The water resistance of briquettes bound with alkali soluble or swellable polymers can be considerably upgraded by pre-blending them with selected non- alkali soluble polymer emulsions.


Although it is accepted that the water resistance of dried films of alkali solubilized  polymers is poor, this can be improved by using a volatile alkali such as ammonium hydroxide instead of fixed alkalis such as sodium or potassium hydroxide.

However, even unneutralised films of the alkali soluble emulsions have inadequate water resistance for them to be used in the manufacture of briquettes which will be transported in bulk, and therefore exposed to the environment.

The use of selected polymer emulsions to impart non-wetting properties to particulate materials is well known.    Blends of these polymers were made with the alkali soluble types.

|  | A | B | C | D | E |
|---|---|---|---|---|---|
| Water | 9,2 | 9,2 | 9,2 | 9,2 | 3,0 |
| Thickener A (solids contents) | 0,5 | 0,4 | 0,2 | 0,1 | 0,1 |
| Reverseal 5* " " | - | 0,2 | 0,4 | 0,6 | 0,5 |
| Thickener B " " | - | - | - | - | 0,2 |

Ammonium hydroxide to pH 9,0

*Reverseal 5 is known to impart non-wetting properties to particulate materials.   Reverseal 5 is manufactured by Revertex S.A. (Pty) Limited.

Each of the above were added to 100 gram of anthracite powder in a planetary mixer.   After thorough mixing, the damp materials were used to mould briquettes as in example 1.   After oven drying, one set of dry briquettes were subjected to crushing.   Another set were immersed in water for 5 hours.   The water uptakes and crushing strengths of these briquettes immediately after removal from the water were determined.

Results

|                      | A  | B  | C  | D  | E   |
|----------------------|----|----|----|----|-----|
| Dry strengths (Kpa)  | 64 | 88 | 90 | 80 | 110 |
| Wet strengths (Kpa)  | 0  | 0  | 78 | 77 | 85  |
| Water uptakes (%)    |    |    | 8,7| 4,8| 6,4 |

Briquettes made from mixes A and B completely disintegrated on submersion.  Briquettes made from Mixes C, D and E were seen to be dry inside and their strengths relatively unaffected after soaking in water.

Example 4

A variety of types of non alkali soluble polyer emulsions can be used to improve the water resistance of the final briquettes.

Coal powder, the bulk of which was less than 6,0 mm in size, was made into briquettes as follows:

| Coal | 100 grams |
|---|---|
| Water | 6 grams |
| Thickener A (solids contents) | 0,25 grams |
| Thickener B  "  " | 0,11 grams |
| Polymer emulsion"  " | 0,50 grams |

Ammonium to pH9.

The following polymer types were used as polymer emulsion in the indicated examples:

Sample A

Surfactant stabilised copolymer emulsion based on styrene and 2-ethyl hexyl acrylate.

Sample B

Surfactant stabilised copolymer emulsion based on styrene and butyl acrylate.

Sample C

Surfactant stabilised acrylic emulsion based on methyl methacrylate and 2-ethyl hexyl acrylate.

Sample D

Surfactant stabilised acrylic emulsion based on methyl methacrylate and butyl acrylate.

Sample E

Colloid stabilised acrylic emulsion based on methyl methacrylate and 2-ethyl hexyl acrylate.

Sample F

Colloid stabilised copolymer emulsion based on vinyl acetate and 2-ethyl hexyl acrylate.

Sample G

Colloid stabilised copolymer emulsion based on vinyl acetate and butyl acrylate.

Sample H

Colloid stabilised homopolymer based on vinyl acetate.

Sample I

A styrene butadiene emulsion having a monomer ratio of styrene/butadiene 52/48.

Briquettes were made up as in the previous examples.

Results

|   | Dry Strength (Kpa) | Wet Strength (Kpa) |
|---|---|---|
| A | 82 | 74 |
| B | 86 | 72 |
| C | 92 | 80 |
| D | 86 | 70 |
| E | 89 | 74 |
| F | 98 | 64 |
| G | 94 | 60 |
| H | 110 | 20 |
| I | 86 | 74 |

Example 5

Briquettes were made on other synthetic thickener polymers.

As in the previous example coal briquettes were made as follows:

Sample A


Unsaturated carboxylic monomer was polymerised
as part of the polymer backbone of an otherwise
alkali insoluble synethic polymer emulsion.
Such emulsions show a considerable lower degree
of thickening on neutralisation.  The pH was
adjusted to 9,0 prior to use.


Sample B


Thickener 9520 incorporating butadiene and styrene
and other ingredients together with the unsaturated
carboxylic acid essentially as disclosed in
U.S. Patent 3 657 175.  The pH was adjusted to
8,7 prior to use.

Results

| | Dry strengths (Kpa) | Wet strengths (Kpa) |
|---|---|---|
| A | 55 | 12 |
| B | 73 | 45 |

Example 6

Addition of surfactants reduces water demand in initial wetting of particulate material, gives greater and faster drying.

The following mixes were added to 100 gram of charcoal powder and briquettes produced.

| | A | B | (grams) |
|---|---|---|---|
| Water | 20 | 10 | |
| Thickener A (solids contents) | 0,1 | 0,2 | |
| Thickener B      "      " | 0,2 | 0,2 | |
| Reverseal 5 (solids contents) | 0,5 | 0,5 | |
| *Nonidet P80 | — | 0,01 | |

*Nonidet P80 is supplied by Shell Chemicals (S.A.) (Pty) Limited and is described as a non-ionic surfactant.

It is to be noted that sample B required less water than sample A to wet out the charcoal sufficiently to bring it to a mouldable consistency suitable for use in producing briquettes.

Briquettes were produced as described in example 1. It was noted that on drying, some cracks appeared in briquettes prepared from mix A (and hence weaker briquettes). Briquettes from mix B had considerably fewer cracks, illustrating the practical advantage of lower level of added water.

One set of each briquette were subjected to dry crushing and another to crushing after 5 hours in water.

### Results

|  | A | B |
|---|---|---|
| Dry strength (Kpa) | 30 | 42 |
| Wet strength (Kpa) | 18 | 5 |
| Water uptake (%) | 8,4 | 24 |

### Example 7

Briquettes were made up with limestone and ammonium nitrate powder (containing 28% N and $CaCO_3$) (Mix A) and a mixture of fertilizer comprising N, P and K.

The ingredients mixed into the 2 fertilizers were the same as Mix E in Example 3 with the added level of water appropriately adjusted. The damp materials were placed in the perpendicular piston mould and subjected to compression (30 Kpa).

Both mixtures had good moulding properties and green strength.

The crushing strengths of these briquettes were

|  | Mix A | Mix B |
|---|---|---|
| Dry | 345 Kpa | 280 Kpa |
| Wet | 15 Kpa | 12 Kpa |

The marked falling-off in crushing strength after soaking was undoubled due to the high level of water soluble salts in the fertilizers.

Example 8

The same procedure for forming briquettes as in Example 7 was used except that the fertilizer was replaced by a sandy soil (11% clay).

The damp soil plus Mix E (Example 3) released easily from the mould, and other good moulding properties and adequate green strength.

The crushing strengths were as follows:-

Dry     150 Kpa
Wet      53 Kpa

28        0053921

CLAIMS

1.

A method of aggregating particulate material characterised
by the step of mixing the material with the reaction
product of (a) an aqueous emulsion of a synthetic polymer
which contains acidic groups, or groups convertible to
acidic groups, which are reactable with a basic substance
to cause swelling or solution of the polymer and to
cause an increase in viscosity of the emulsion, and
(b) a basic substance in an amount sufficient to neutralise
at least some of the acidic groups; and then forming
the product into an aggregate.

2.

The method of claim 1 characterised in that the synthetic
polymer emulsion is an alkali soluble thickener.

3.

The method of claim 2 characterised in that the alkali
soluble thickener is based substantially on C3 to C6
unsaturated carboxylic acid(s) copolymerised with  C1
to C4 alkyl acrylate(s).

4.

The method of claim 2 characterised in that the alkali
soluble thickener is based substantially on a mixture of
C3 to C6 unsaturated carboxylic acid(s) copolymerised
with a monomeric material chosen from styrene and butadiene.

5.

The method of claim 3 characterised in that the C3 to C6
unsaturated carboxylic acid is acrylic acid and/or
methacrylic acid and the C1 to C4 alkyl acrylate is methyl
acrylate and/or ethyl acrylate.

6.

The method of aggregating particulate material characterised
by the step of mixing the material with the reaction product
of (a) an aqueous emulsion of a synthetic polymer which
contains acidic groups, or group convertible to a acidic
groups, which are reactable with a basic substance to cause
swelling or solution of the polymer and to cause an increase
in viscosity of the emulsion, and (b) a basic substance
in an amount sufficient to neutralise at least some of the
acidic groups; and including a polymer emulsion capable
of imparting substantial non-wetting properties to the
particulate material, and then forming the product into an
aggregate.

7.

The method of claim 6 characterised in that the synthetic polymer is chosen from homopolymers or copolymers incorporating at least one of :-
vinyl esters of aliphatic acids having 1 to 18 carbon atoms, acrylic acid esters or methacrylic acid esters of alcohols having 1 to 18 carbon atoms, and mono- or di-ethylenically unsaturated hydrocarbons.

8.

The method of claim 6 characterised in that the synthetic polymer is chosen from homopolymers or copolymers incorporating at least one of:-
vinyl acetate, 2-ethyl hexyl acrylate, butyl acrylate, ethyl acrylate, methyl methacrylate, styrene and butadiene.

9.

An aggregate comprising particulate material bound by the reaction product of (a) an aqueous emulsion of a synthetic polymer which contains acidic groups, or groups convertible to acidic groups, which are reactable with a basic substance to cause swelling or solution of the polymer and to cause an increase in viscosity of the emulsion, and (b) a basic substance in an amount sufficient to neutralise at least some of the acidic groups.

10.

An aggregate comprising particulate material bound by the reaction product of (a) an aqueous emulsion of a synthetic polymer which contains acidic groups, or group convertible to acidic groups, which are reactable with a basic substance to cause swelling or solution of the polymer and to cause an increase in viscosity of the emulsion, and (b) a basic substance in an amount sufficient to neutralise at least some of the acidic groups; and including a polymer emulsion capable of imparting substantial non-wetting properties to the particulate material.

11.

The aggregate of claim 9 characterised in that the particulate material is chosen from coal, anthracite, mineral ores, sand, soil, graphite, sawdust, charcoal, fertilizers and the like.

12.

The aggregate of claim 10 characterised in that the particulate material is chosen from coal, anthracite, mineral ores, sand, soil, graphite, sawdust, charcoal, fertilizers and the like.